# EUROPEAN PATENT SPECIFICATION

(11) **EP 1 455 676 B1**
(45) Date of publication and mention of the grant of the patent: **21.07.2010**
(21) Application number: 02792104.8
(22) Date of filing: 20.12.2002
(51) Int. Cl.: A61C 13/003, A61C 13/225

(54) **PROSTHESIS FOR A TOOTH AND SET FOR SUCH A PROSTHESIS**
ZAHNPROTHESE UND SET FÜR EINE SOLCHE ZAHNPROTHESE
PROTHESE DENTAIRE ET ENSEMBLE POUR UNE TELLE PROTHESE

(30) Priority: 20.12.2001 NL 1019628
(43) Date of publication of application: 15.09.2004
(73) Proprietor: TDB Dental Biomechanik, 48485 Neuenkirchen (DE)
(72) Inventor: JANSEN, Josef, NL-1315 HV Almere (NL)
(86) International application number: PCT/NL2002/000855
(87) International publication number: WO 2003/053275

(56) References cited:
- EP-A- 0 642 767
- US-A- 2 705 366
- US-A- 4 813 873

## Description

The invention relates to a prosthetic construction between two natural pillar elements in a set of teeth, for the replacement of a tooth, comprising two anchor elements, each fixed to a respective pillar, and a dental prosthesis provided with two fixing parts, each rigidly fixed to a respective anchor, one of the fixing parts being movably connected to the prosthesis.

Such a prosthetic construction is known from US-A-4813873. By means of this known prosthetic construction, a dental prosthesis can be suspended securely between two sound teeth. The fixing devices with these so-called sound pillar elements must have such strength and reliability that an acceptable service life of the prosthesis can be guaranteed. Furthermore, the fixing devices must be capable of withstanding the considerable forces to which the prosthesis is exposed, particularly when it is used in the molar region.

However, it is found in practice that it is precisely in that molar region that a substantial percentage of prosthetic constructions work loose and give way prematurely. It appears that this detachment is caused by the constant, albeit minuscule movements that the pillar elements make relative to each other in the buccal, lingual and palatine direction. As a result of these constant movements, the acid-etch or adhesive bridges with the pillar elements are weakened. The limited bond strength of cements permitted in dentistry is the main cause of this weakening. Those cements that are acceptable from a medical point of view are not capable of absorbing the abovementioned movements.

The object of the invention is therefore to provide a prosthetic construction that is better capable of withstanding the movements that constantly occur in the set of teeth. That object is achieved by a prosthetic construction between two natural pillar elements in a set of teeth, for the replacement of a tooth, comprising:
two anchor elements, each provided with a pin (6) fixed to a respective natural pillar element,
two fixing parts, each rigidly fixed to a respective anchor, and a dental prosthesis, wherein one of the fixing parts is fixed in a corresponding opening of the dental prosthesis and the other of the fixing parts fits telescopically and rotatably into a hollow cylindrical connecting part fixed in a corresponding opening of the dental prosthesis, such that the other of the fixing parts is movably connected to the dental prosthesis.
The presence of a movable connection in the prosthetic construction means that no internal forces can occur in the fixing devices. The result of this is that these fixing devices are subjected to a considerably less heavy load than is the case with the known prosthetic constructions, so that a considerable service life can be guaranteed.

In particular, the connection between the fixing part that is movably connected to the prosthesis, on the one hand, and the pillar element, on the other hand, can permit a translation according to one degree of freedom. Said translation is preferably directed from the one pillar element to the other pillar element. The other fixing part is rigidly connected to the corresponding pillar element.

The connection between the fixing part that is movably connected to the prosthesis, on the one hand, and the pillar element, on the other hand, can permit not only a translation, but also a rotation. The axis of rotation in this case extends from the one pillar element to the other.

The movable connection can be designed in all kinds of ways. The preferred way is a movable connection comprising telescopic parts. The telescopic parts can have interactive surfaces with a circular cross section. Such an embodiment provides a very stable support for the prosthesis, while the required mobility is still ensured.

The fixing parts and the anchors can be in the form of integral pairs. According to an alternative embodiment, the fixing parts and the anchors can form separate parts, in the case of which the anchor and fixing element forming the pair that produces the rigid fixing are stably supported relative to each other, owing to the non-round shapes. Furthermore, the fixing parts can each in the usual manner bear a wing that is fixed to a respective pillar element.

The invention further relates to a set for producing the prosthetic construction, which set comprises two anchor elements, each provided with a pin that can be rigidly connected to a natural pillar element, in a set of teeth,
two fixing parts, each of which can be rigidly fixed to a respective anchor element,
a dental prosthesis, and
a hollow cylindrical connecting part that can be rigidly connected in a corresponding opening of the dental prosthesis, wherein one of the fixing parts can be fixed in a corresponding opening of the prothesis and the other of the fixing parts fits telescopically and rotatably into the hollow cylindrical connecting part, such that the other of the fixing parts is movably connected to the dental prosthesis.

The connection between the connecting part and the fixing part permits a translation, and the connection between the connecting part and the fixing element can also permit at least one rotation.

The connecting part grips around the fixing part in such a way that the fixing part and the connecting part are movable in a direction relative to each other, and transversely to that direction are blocked relative to each other; the connection between the connecting part and the fixing part can, for example, be telescopic.

The anchor element and the fixing part can be of corresponding non-round shapes. Together, they can be pushed laterally over the anchor element, thereby forming a close fit.

A reliable connection between the anchor element and the fixing part can be obtained by means of corresponding shapes or form closure, for example a saddle shape.

The connecting part can have a closed end wall and be open on the opposite side, in such a way that the fixing part can be pushed through the open side into the connecting part. The end wall provides a good closure, so that food residues, bacteria and the like are prevented from entering.

The anchor element can be fixed on the natural pillar element in various ways. For instance, the anchor element can have a pin that can be fixed in a hole drilled in a natural pillar element.

According to another embodiment, the anchor element can be provided with an inlay. Said inlay is placed in the prepared chewing surface of a natural pillar element.

The invention will be explained in greater detail below with reference to an exemplary embodiment illustrated in the figures.
Fig. 1 shows a part of a set of teeth with two molars, between which a prosthetic construction according to the invention has to be fitted.
Fig. 2 shows the various parts of the prosthetic construction according to the invention, in the disassembled state.
Fig. 3 shows another prosthetic construction, ready for fitting.
Fig. 4 shows the fitted prosthetic construction according to Fig. 3.
Fig. 5 shows a set, in the disassembled state, for use in the prosthetic construction.
Fig. 6 shows the set according to Fig. 5, in the assembled state.
Fig. 7 shows a side view of the set.
Fig. 8 shows a cross section along the line VIII-VIII of Fig. 9.
Fig. 9 shows a bottom view of the set.
Fig. 10 shows a front view along the line X-X of the set.

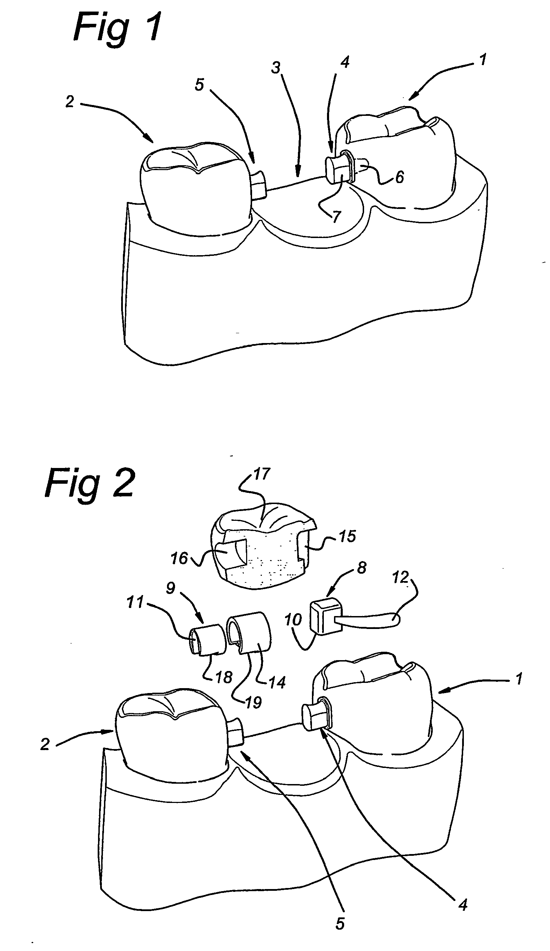

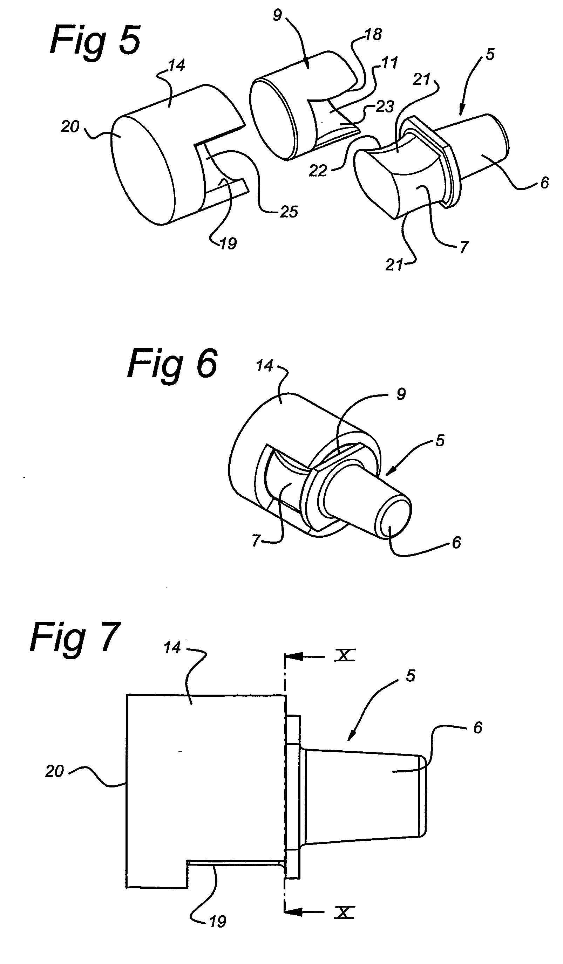

The part of a set of teeth shown in Figure 1 comprises two sound pillar elements or teeth 1, 2, between which an open space 3 is present, in which space a dental prosthesis has to be fitted. Two holes have already been drilled in the sound pillar elements 1, 2, in which holes the anchors 4, 5 are fixed. Said anchors 4, 5 have a pin 6, which is inserted into the corresponding hole in the tooth 1, 2, and also have a head 7 with a non-round cross section; see Figure 5.

In the case of the prosthetic construction according to the invention two fixing parts 8, 9 are used. Said fixing parts each have a non-round opening 10, 11, which fits closely over the corresponding non-round head 7 of a respective anchor 4, 5.

A so-called wing 12 is fixed on the fixing part 8, which wing ultimately has to be fixed on the inside of the corresponding pillar element 1.

The fixing part 9 fits telescopically and rotatably into the connecting part 14. The fixing part 8 and the cylindrical connecting part 14 are fixed in corresponding openings 15 and 16 respectively of the prosthesis indicated in its entirety by 17.

The dentist places the fixing part 9 in the cylindrical connecting part 14. These two parts are provided with a slot 18, 19, in such a way that they can be pushed over the corresponding anchor 5. In the process, the anchor 5 is accommodated in the opening 11 of the fixing part 9. The fixing part 8 is likewise pushed with its opening 10 over the corresponding anchor 4. The corresponding fixing parts 8, 9 are subsequently cemented down on the anchors 4, 5, and the prosthetic construction is then ready.

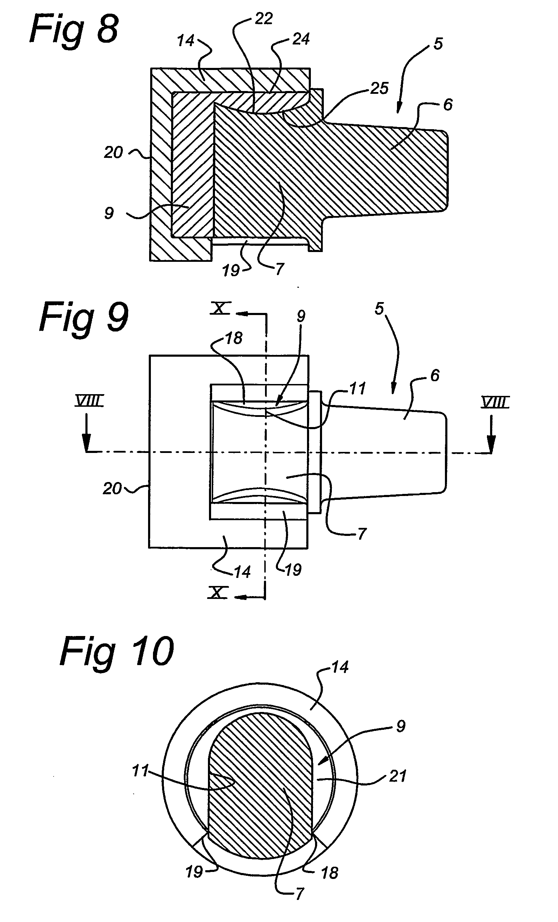

In the prosthetic construction according to the invention the set shown in Figures 5-10 is used. This set comprises first of all the anchor part 5, the fixing part 9 and the connecting part 14. The anchor part 5 has a pin 6, which is fixed in a prepared hole in a sound pillar element. In addition, said set comprises a non-round head 7 with recessed sides 21, and a recessed top 22 (see also Figure 8). The fixing part 9 has an opening 11 with a corresponding shape, in other words thickened sides 23 and a recessed top 25 (saddle shape, also see Figure 8).

The connecting part 14 is cylindrical in shape with an internal cylindrical space 25, which can be pushed in a close fit over the external, likewise cylindrical fixing part 9.

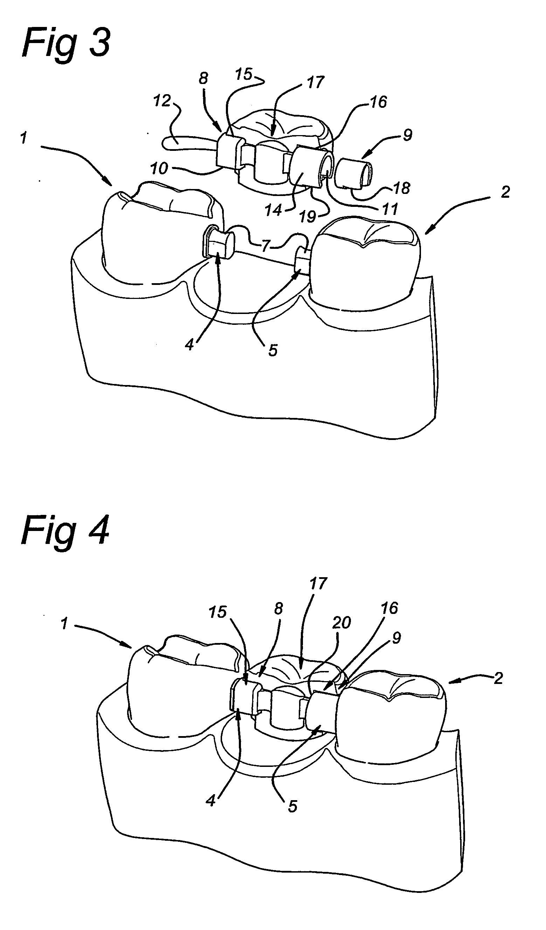

As shown in Figures 3 and 4, the fixing part 9 is pushed into the connecting part 14, which is combined with the prosthesis 17. The combination of fixing part 9 and connecting part 14 can then be pushed over the head 7 of the anchor 5, while the fixing part 8 is also pushed over the anchor 4. The fixing parts 9, 8 are cemented fast on their corresponding anchors 5, 4.

As a result of the cylindrical shapes of fixing part 9 and connecting part 14, the anchor 5, and consequently the pillar element to which said anchor is fixed, can perform both translations and rotations relative to the prosthetic construction 17.

As can be seen clearly in Figure 10, the connecting part 14 is protected well against lateral movement away from the fixing part 9, i.e. movement away from the tooth, owing to the fact that the opening 19 by means of which the connecting part 14 together with the fixing part 9 can be pushed over the head 7 of the anchor 5 extends through an angle of less than 180°, in the example shown approximately 90°. A fixing through corresponding shapes is ensured in this way.

It can be seen in Figures 7, 8 and 9 that the fixing part 9 is retained securely on the head 7 of the anchor 5 by corresponding shapes. In addition, these parts are fixed to each other by cementing. The connecting part 14 can also translate and rotate relative to the fixing part 9. A further advantage is that less high standards need be set for the parallelism of the anchors 4, 5.

## Claims

1. Prosthetic construction between two natural pillar elements (1, 2) in a set of teeth, for the replacement of a tooth, comprising:
two anchor elements (4, 5), each provided with a pin (6) fixed to a respective natural pillar element (1, 2),
two fixing parts (8, 9), each rigidly fixed to a respective anchor (4, 5), and
a dental prosthesis (17), wherein
one of the fixing parts (8) is fixed in a corresponding opening (15) of the dental prosthesis (17) and the other of the fixing parts (9) fits telescopically and rotatably into a hollow cylindrical connecting part (14) fixed in a corresponding opening (16) of the dental prosthesis (17), such that the other of the fixing parts (9) is movably connected to the dental prosthesis (17).

2. Prosthetic construction according to claim 1, in which the movable connection permits a translation.

3. Prosthetic construction according to claim 2, in which the translation is directed from the one natural pillar element (1) to the other natural pillar element (2).

4. Prosthetic construction according to one of the preceding claims, in which the movable connection permits a rotation.

5. Prosthetic construction according to claim 4, in which the axis of rotation extends from the one natural pillar element (1) to the other natural pillar element (2).

6. Prosthetic construction according to claims 4 and 5, in which the other of the fixing parts (9) and the hollow cylindrical connecting part (14) have interactive surfaces with a circular cross section.

7. Prosthetic construction according to one of the preceding claims, in which the one of the fixing parts (8) is rigidly connected to the prothesis (17).

8. Prosthetic construction according to one of the preceding claims, in which the fixing parts (8, 9) and the anchors (4, 5) form integral pairs.

9. Prosthetic construction according to claims 1 to 7, in which the fixing parts (8, 9) and the anchors (4, 5) form separate parts and interact with each other by means of non-round shapes.

10. Prosthetic construction according to one of the preceding claims, in which the one of the fixing parts (8) bears a wing (12) that is fixed to the respective natural pillar element (1).

11. Set for a prosthetic construction according to one of the preceding claims comprising:
two anchor elements (4, 5), each provided with a pin (6) that can be rigidly connected to a natural pillar element (1, 2) in a set of teeth,
two fixing parts (8, 9), each of which can be rigidly fixed to a respective anchor element (4, 5),
a dental prosthesis (17), and
a hollow cylindrical connecting part (14) that can be rigidly connected in a corresponding opening (16) of the dental prosthesis (17), wherein
one of the fixing parts (8) can be fixed in a corresponding opening (15) of the prothesis (17) and the other of the fixing parts (9) fits telescopically and rotatably into the hollow cylindrical connecting part (14), such that the other of the fixing parts (9) is movably connected to the dental prosthesis (17).

12. Set according to claim 11, in which the movable connection between the hollow cylindrical connecting part (14) and the other of the fixing parts (9) permits a translation.

13. Set according to claim 12, in which the translation is directed from the one natural pillar element (1) to the other natural pillar element (2).

14. Set according to one of claims 11 to 13, in which the connection between the hollow cylindrical connecting part (14) and the other of the fixing parts (9) permits a rotation.

15. Set according to claim 14, in which the axis of rotation extends from the one natural pillar element (1) to the other natural pillar element (2).

16. Set according to one of claims 11 to 15, in which the hollow cylindrical connecting part (14) grips around the other of the fixing parts (9) in such a way that the other of the fixing parts (9) and the hollow cylindrical connecting part (14) are movable in a direction relative to each other and are blocked relative to each other transversely to that direction.

17. Set according to one of claims 11 to 16, in which the other of the fixing parts (9) and the hollow cylindrical connecting part (14) have interactive surfaces with a circular cross section.

18. Set according to one of claims 11 to 17, in which one anchor element (5) is of a non-round shape and the other of the fixing parts (9) is of a corresponding non-round shape and can be pushed laterally over the one anchor element (5), thereby forming a close fit.

19. Set according to claim 18, in which the one anchor element (5) is saddle-shaped.

20. Set according to claim 18 or 19, in which the other of the fixing parts (9) has a hollow (11) that by way of a slot (18) opens into the periphery of the other of the fixing parts (19), by way of which slot (18) the one anchor element (5) can be pushed into the hollow (11).

21. Set according to one of claims 18 to 20, in which the hollow cylindrical connecting part (14) together with the other of the fixing parts (9) connected to it can be pushed laterally over the one anchor element (5).

22. Set according to claim 21, in which the hollow cylindrical connecting part (14) has a hollow (25) that by way of a slot (19) opens into the periphery of the hollow cylindrical connecting part (14), which slot (19) approximately coincides with the slot (18) in the other of the fixing part (9) combined with the hollow cylindrical connecting part (14).

23. Set according to claim 22, in which the hollow cylindrical connecting part (14) has an undercut hollow (25), into which the other of the fixing parts (9) can be pushed.

24. Set according to claim 23, in which the hollow cylindrical connecting part (14) has a closed end wall (20) and is open on the opposite side, in such a way that the other of the fixing parts (9) can be pushed into the hollow cylindrical connecting part (14) by way of the open side.

25. Set according to one of claims 11 to 24, in which the pins (6) of the anchor elements (4, 5) can be fixed in a hole drilled in the respective natural pillar element (1, 2).

## Patentansprüche

1. Prothesenkonstruktion zwischen zwei natürlichen Pfeilerelementen (1, 2) in einem Zahnsatz zum Ersatz eines Zahnes, die Folgendes umfasst: zwei verankerungselemente (4, 5), die jeweils mit einem Stift (6) versehen sind, der an einem jeweiligen natürlichen Pfeilerelement (1, 2) befestigt ist, zwei Fixierungsteile (8, 9), die jeweils starr an einem jeweiligen Anker (4, 5) befestigt sind, und eine Zahnprothese (17), worin ein Fixierungsteil (8) in einer entsprechenden Öffnung (15) der Zahnprothese (17) befestigt ist und der andere Fixierungsteil (9) teleskopartig und drehbar in einen hohlen zylindrischen Verbindungsteil (14), der in einer entsprechenden Öffnung (16) der Zahnprothese (17) befestigt ist, passt, so dass der andere Fixierungsteil (9) beweglich mit der Zahnprothese (17) verbunden ist.

2. Prothesenkonstruktion nach Anspruch 1, worin die bewegliche Verbindung eine Übersetzung ermöglicht.

3. Prothesenkonstruktion nach Anspruch 2, worin die Übersetzung von einem natürlichen Pfeilerelement (1) auf das andere natürliche Pfeilerelement (2) gerichtet ist.

4. Prothesenkonstruktion nach einem der vorhergehenden Ansprüche, worin die bewegliche Verbindung eine Drehung ermöglicht.

5. Prothesenkonstruktion nach Anspruch 4, worin die Drehachse von einem natürlichen Pfeilerelement (1) zum anderen natürlichen Pfeilerelement (2) verläuft.

6. Prothesenkonstruktion nach Anspruch 4 und 5, worin der andere Fixierungsteil (9) und der hohle zylindrische Verbindungsteil (14) interaktive Oberflächen mit einem kreisförmigen Querschnitt aufweisen.

7. Prothesenkonstruktion nach einem der vorhergehenden Ansprüche, worin ein Fixierungsteil (8) starr mit der Prothese (17) verbunden ist.

8. Prothesenkonstruktion nach einem der vorhergehenden Ansprüche, worin die Fixierungsteile (8,9) und die Anker (4, 5) einstückige Teile bilden.

9. Prothesenkonstruktion nach Ansprüchen 1 bis 7, worin die Fixierungsteile (8, 9) und die Anker (4, 5) getrennte Teile bilden und über nicht-runde Formen miteinander zusammenwirken.

10. Prothesenkonstruktion nach einem der vorhergehenden Ansprüche, worin ein Fixierungsteil (8) einen Flügel (12) trägt, der am jeweiligen natürlichen Pfeilerelement (1) befestigt ist.

11. Set für eine Prothesenkonstruktion nach einem der vorhergehenden Ansprüche, das Folgendes umfasst:
zwei Ankerelemente (4, 5), die jeweils mit einem Stift (6) versehen sind, der starr mit einem natürlichen Pfeilerelement (1, 2) in einem Zahnsatz verbunden werden kann, zwei Fixierungsteile (8, 9), die jeweils starr an einem jeweiligen Ankerelement (4, 5) befestigt werden können, eine Zahnprothese (17) und einen hohlen zylindrischen Verbindungsteil (14), der starr in einer entsprechenden Öffnung (16) der Zahnprothese (17) befestigt werden kann, worin ein Fixierungsteil (8) in einer entsprechenden Öffnung (15) der Zahnprothese (17) befestigt werden kann und der andere Fixierungsteil (9) teleskopartig und drehbar in den hohlen zylindrischen Verbindungsteil (14) passt, so dass der andere Fixierungsteil (9) beweglich mit der Zahnprothese (17) verbunden ist.

12. Set nach Anspruch 11, worin die bewegliche Verbindung zwischen dem hohlen zylindrischen Verbindungsteil (14) und dem anderen Fixierungsteil (9) eine Übersetzung ermöglicht.

13. Satz nach Anspruch 12, worin die Übersetzung von einem natürlichen Pfeilerelement (1) auf das andere natürliche Pfeilerelement (2) gerichtet ist.

14. Satz nach einem der Ansprüche 11 bis 13, worin die Verbindung zwischen dem hohlen zylindrischen Verbindungsteil (14) und dem anderen Fixierungsteil (9) eine Drehung ermöglicht.

15. Set nach Anspruch 14, worin die Drehachse von einem natürlichen Pfeilerelement (1) zum anderen natürlichen Pfeilerelement (2) verläuft.

16. Set nach einem der Ansprüche 11 bis 15, worin der hohle zylindrische Verbindungsteil (14) so um den anderen Fixierungsteil (9) greift, dass der andere Fixierungsteil (9) und der hohle zylindrische Verbindungsteil (14) in einer Richtung relativ zueinander bewegt werden können und quer zu dieser Richtung relativ zueinander blockiert sind.

17. Set nach einem der Ansprüche 11 bis 16, worin der andere Fixierungsteil (9) und der hohle zylindrische Verbindungsteil (14) interaktive Oberflächen mit einem kreisförmigen Querschnitt aufweisen.

18. Set nach einem der Ansprüche 11 bis 17, worin ein Ankerelement (5) eine nicht-runde Form aufweist und der andere Fixierungsteil (9) eine entsprechende nicht-runde Form aufweist und seitlich über das eine Ankerelement (5) gedrückt werden kann, so dass ein enger Passsitz entsteht.

19. Set nach Anspruch 18, worin ein Ankerelement (5) sattelförmig ist.

20. Set nach Anspruch 18 oder 19, worin der andere Fixierungsteil (9) einen Hohlraum (11) aufweist, der über einen Schlitz (18) in den Umfang des anderen Fixierungsteils (19) öffnet, wobei das eine Ankerelement (5) über den Schlitz (18) in den Hohlraum (11) gedrückt werden kann.

21. Set nach einem der Ansprüche 18 bis 20, worin der hohle zylindrische Verbindungsteil (14) zusammen mit dem mit ihm verbundenen anderen Fixierungsteil (9) seitlich über das eine Ankerelement (5) gedrückt werden kann.

22. Set nach Anspruch 21, worin der hohle zylindrische Verbindungsteil (14) einen Hohlraum (25) aufweist, der über einen Schlitz (19) in den umfang des hohlen zylindrischen Verbindungsteils (14) öffnet, wobei der Schlitz (19) ungefähr mit dem Schlitz (18) im anderen, mit dem hohlen zylindrischen Verbindungsteil (14) kombinierten Fixierungsteil (9) zusammenfällt.

23. Set nach Anspruch 22, worin der hohle zylindrische Verbindungsteil (14) einen hinterschnittenen Hohlraum (25) aufweist, in den der andere Fixierungsteil (9) gedrückt werden kann.

24. Set nach Anspruch 23, worin der hohle zylindrische Verbindungsteil (14) eine geschlossene Endwand (20) aufweist und auf der gegenüberliegenden Seite offen ist, so dass der andere Fixierungsteil (9) über die offene Seite in den hohlen zylindrischen Verbindungsteil (14) gedrückt werden kann.

25. Set nach einem der Ansprüche 11 bis 24, worin die Stifte (6) der Ankerelemente (4, 5) in einem Loch befestigt werden können, das im jeweiligen natürlichen Pfeilerelement gebohrt ist.

## Revendications

1. Structure de prothèse entre deux éléments de pilier naturels (1, 2) dans un ensemble de dents, pour le remplacement d'une dent, comprenant:
- deux éléments d'ancrage (4, 5) comprenant chacun une broche (6) fixée à un élément de pilier naturel respectif (1, 2);
- deux parties de fixation (8, 9) chacune fixée de façon rigide à un ancrage respectif (4, 5), et
- une prothèse dentaire (17),
dans laquelle une des parties de fixation (8) est fixée dans une ouverture correspondante (15) de la prothèse dentaire (17), et l'autre des parties de fixation (9) s'agence de façon télescopique et rotative dans une partie de connexion cylindrique creuse (14) qui est fixée dans une ouverture correspondante (16) de la prothèse dentaire (17), de telle sorte que l'autre des parties de fixation (9) soit connectée de façon mobile à la prothèse dentaire (17).

2. Structure de prothèse selon la revendication 1, dans laquelle la connexion mobile permet une translation.

3. Structure de prothèse selon la revendication 2, dans laquelle la translation est dirigée d'un premier élément de pilier naturel (1) à l'autre élément de pilier naturel (2).

4. Structure de prothèse selon l'une quelconque des revendications précédentes, dans laquelle la connexion mobile permet une rotation.

5. Structure de prothèse selon la revendication 4, dans laquelle l'axe de rotation s'étend du premier élément de pilier naturel (1) à l'autre élément de pilier naturel (2).

6. Structure de prothèse selon la revendication 4 ou 5, dans laquelle l'autre des parties de fixation (9) et la partie de connexion cylindrique creuse (14) présentent des surfaces interactives possédant une section transversale circulaire.

7. Structure de prothèse selon l'une quelconque des revendications précédentes, dans laquelle la première des parties de fixation (8) est connectée de façon rigide à la prothèse (17).

8. Structure de prothèse selon l'une quelconque des revendications précédentes, dans laquelle les parties de fixation (8, 9) et les ancrages (4, 5) forment des paires intégrées.

9. Structure de prothèse selon l'une quelconque des revendications 1 à 7, dans laquelle les parties de fixation (8, 9) et les ancrages (4, 5) forment des parties séparées et interagissent les uns avec les autres au moyen de formes non rondes.

10. Structure de prothèse selon l'une quelconque des revendications précédentes, dans laquelle la première des parties de fixation (8) comporte une ailette (12) qui est fixée à l'élément de pilier naturel respectif (1).

11. Ensemble pour une structure de prothèse selon l'une quelconque des revendications précédentes, comprenant:
- deux éléments d'ancrage (4, 5) comprenant chacun une broche (6) pouvant être connectée de façon rigide à un élément de pilier naturel (1, 2) dans un ensemble de dents;
- deux parties de fixation (8, 9) pouvant être fixées chacune de façon rigide à un élément d'ancrage respectif (4, 5),
- une prothèse dentaire (17), et
- une partie de connexion cylindrique creuse (14) pouvant être connectée de façon rigide dans une ouverture correspondante (16) de la prothèse dentaire (17),
dans lequel une des parties de fixation (8) peut être fixée dans une ouverture correspondante (15) de la prothèse dentaire (17), et l'autre des parties de fixation (9) s'agence de façon télescopique et rotative dans la partie de connexion cylindrique creuse (14), de telle sorte que l'autre des parties de fixation (9) soit connectée de façon mobile à la prothèse dentaire (17).

12. Ensemble selon la revendication 11, dans lequel la connexion mobile entre la partie de connexion cylindrique creuse (14) et l'autre des parties de fixation (9) permet une translation.

13. Ensemble selon la revendication 12, dans lequel la translation est dirigée d'un premier élément de pilier naturel (1) à l'autre élément de pilier naturel (2).

14. Ensemble selon l'une quelconque des revendications 11 à 13, dans lequel la connexion entre la partie de connexion cylindrique creuse (14) et l'autre des parties de fixation (9) permet une rotation.

15. Ensemble selon la revendication 14, dans lequel l'axe de rotation s'étend du premier élément de pilier naturel (1) à l'autre élément de pilier naturel (2).

16. Ensemble selon l'une quelconque des revendications 11 à 15, dans lequel la partie de connexion cylindrique creuse (14) s'accroche autour de l'autre des parties de fixation (9) de telle sorte que l'autre des parties de fixation (9) et la partie de connexion cylindrique creuse (14) soient mobiles dans une direction l'une par rapport à l'autre et soient bloquées l'une par rapport à l'autre transversalement à cette direction.

17. Ensemble selon l'une quelconque des revendications 11 à 16, dans lequel l'autre des parties de fixation (9) et la partie de connexion cylindrique creuse (14) présentent des surfaces interactives possédant une section transversale circulaire.

18. Ensemble selon l'une quelconque des revendications 11 à 17, dans lequel un premier élément d'ancrage (5) est de forme non ronde, et l'autre des parties de fixation (9) a une forme non ronde correspondante et peut être poussée latéralement sur le premier élément d'ancrage (5) formant ainsi un ajustement serré.

19. Ensemble selon la revendication 18, dans lequel le premier élément d'ancrage (5) est en forme de selle.

20. Ensemble selon la revendication 18 ou 19, dans lequel l'autre des parties de fixation (9) comporte un creux (11) qui s'ouvre au moyen d'une fente (18) dans la périphérie de l'autre des parties de fixation (19), fente (18) au moyen de laquelle le premier élément d'ancrage (5) peut être poussé dans le creux (11).

21. Ensemble selon l'une quelconque des revendications 18 à 20, dans lequel la partie de connexion cylindrique creuse (14), de concert avec l'autre des parties de fixation (9) connectée à celle-ci, peut être poussée latéralement sur le premier élément d'ancrage (5).

22. Ensemble selon la revendication 21, dans lequel la partie de connexion cylindrique creuse (14) comporte un creux (25) qui s'ouvre au moyen d'une fente (19) dans la périphérie de la partie de connexion cylindrique creuse (14), ladite fente (19) coïncidant approximativement avec la fente (18) dans l'autre des parties de fixation (9) combinée avec la partie de connexion cylindrique creuse (14).

23. Ensemble selon la revendication 22, dans lequel la partie de connexion cylindrique creuse (14) comporte un creux de contre-dépouille (25) dans lequel l'autre des parties de fixation (9) peut être poussée.

24. Ensemble selon la revendication 23, dans lequel la partie de connexion cylindrique creuse (14) comprend une paroi d'extrémité fermée (20) et est ouverte sur le côté opposé, de telle sorte que l'autre des parties de fixation (9) puisse être poussée dans la partie de connexion cylindrique creuse (14) au moyen du côté ouvert.

25. Ensemble selon l'une quelconque des revendications 11 à 24, dans lequel les broches (6) des éléments d'ancrage (4, 5) peuvent être fixées dans un trou formé dans l'élément de pilier naturel respectif.
